# EUROPEAN PATENT APPLICATION

(11) **EP 1 235 410 A2**
(43) Date of publication of application: **28.08.2002**
(21) Application number: 02250860.0
(22) Date of filing: 04.02.2002
(51) Int. Cl.: H04L 29/06, A63F 13/12

(54) **Computer system on the world wide web**

(30) Priority: 21.02.2001 GB 0104232
(71) Applicant: Reynolds, David John, Canley, Coventry CV5 6BJ (GB)
(72) Inventor: Reynolds, David John, Canley, Coventry CV5 6BJ (GB)
(74) Representative: Roberts, David Leslie

(57) **Abstract**

A computer system has a plurality of computers, each of which is loaded with software for providing a web browser function. The computers can interact with each other via the world wide web, and the system has a plurality of web servers, each having a respective address, and software for defining a notional multi-dimensional space which contains said browsers and in which the co-ordinates of the position of each browser in that space are derived from the address of a server computer. There is also software that permits interactions between said computers when the locations of their browsers relative to each other in the notional space satisfy a predetermined requirement, for example when the browsers are at the same position in the notional space. The system enables the playing of a game to be incorporated into the "surfing" of the world wide web. The invention also lies in a computer program for causing a computer to interact with another computer via a computer network, when the program has instructions for creating a notional multi-dimensional space, the co-ordinates of points in which are representative of network addresses, and for causing said computer to access any two or anymore selected addresses and for calculating distance in the notional space between the co-ordinate points corresponding to those addresses.

## Description

### Field of the Invention

This invention relates generally to a computer system on the world wide web and more particularly to a computer system in which a plurality of computers can interact via the world wide web (the web), to a computer network comprising a plurality of computers equipped with software enabling them to interact via the world wide web and to a method of playing a game on a computer network wherein a plurality of computers are able to interact via the world wide web.

### The Invention

According to one aspect of the invention, there is provided a computer system in which a plurality of computers, each having software providing a web browser, can interact with each other via the world wide web, the system comprising a plurality of web servers, each having a respective address, and software for defining a notional multi-dimensional space which contains said browsers and in which the co-ordinates of the position of each browser in that space are derived from the address of a server computer, the system also including software for permitting interactions between said computers when the locations of their browsers relative to each other in the notional space satisfy a predetermined requirement.

Thus, the invention provides a system in which the domain of the world wide web is treated as a multi-dimensional space so that the process whereby a web browser accesses a number of servers in turn can be treated as movement of the browser through the notional space to each server co-ordinate point in turn.

Preferably, said predetermined requirement is that the browsers of the computers be at the same location in said notional space, so that any two computers whose browsers are at the same point can interact with each other.

Preferably, the server addresses are numerical, and software derived the location of any server in the notional space by treating at least part of the address as the Cartesian co-ordinates of the server in that space.

Preferably, the notional space is of three or more dimensions.

The current location of any web browser may be given by the co-ordinates of a previously browsed server, but preferably the location of a browser at any given time is the location of the server currently being browsed thereby.

Preferably, the software also includes program instructions for causing the distance between first and second co-ordinate points in said notional space to be calculated, the software preferably also including means for limiting the distance that a browser can travel in the notional space (by moving from one server address to another). Thus, the invention enables the system of computers to be used to play a game in which players interact with each other in said notional space, while simultaneously accessing the servers to which their browsers travel (even if those servers supply information unrelated to the game).

There may be more than one type of web server each defining a unique co-ordinate point in the three-dimensional space and the web browser or browsers may be able to interact differently with one type of said web server from servers of the other type.

Preferably, for example, one of the servers may be programmed with software which causes it to supply to the computer browsing that server information identifying one of more other computers also browsing that server.

The web browser or browsers may be modified by a plug-in extension to an existing standard web browser or may be a specially designed software intrinsically suited to travel the three co-ordinate space.

The web servers may have standard server programmes modified by an ISAPI software, and a CGI program or even an HTML normal type page. Alternatively, the web servers may be of intrinsic design able to define the three co-ordinate space.

In its gaming aspect, the concept is a game in which the internet domain space is used as a three dimensional gaming grid through which game players navigate browsers, conveniently termed web-ships, the current location being that web-site currently being browsed. Web-ships are able to interact, trade and fight when within range of each other as determined by the calculated "distance" between their web-ships. Upgrades, rearms, repair and safe haven may be available from designated web sites providing facilities for this purpose, these sites conveniently being termed web-bases.

Trading tokens, or credits, can be earned by visiting web sites, combat and trading.

The internet game space may also contain natural phenomena such as web nebulae herein termed "webulae", which will have different effects on shields, weapons, scan range and so forth, and web asteroids, herein termed "websteroids" which will provide some level of protection to web-ships under fire.

It is envisaged that the web-ship software will be provided as a plug-in extension for the standard web-browsers or a custom web-browser with a basic ship configuration. More advanced ship configurations, weapons, and equipment may be attainable by trading credits within the game or buying ship configurations via retail outlets or online.

A preferred game may comprise four components, namely:
- A web-browser with the ability to act as a web-ship either by the addition of web-ship capability as a plug-in extension or by intrinsic design.
- A web-server capable of notifying client web-pilots of all other web-pilots currently browsing the web-server site. This could be by the use of an ISAPI extension to a standard server program, a CGI program or even by an HTML page or by intrinsic design. This is herein called a web-beacon.
- A web-server with all the features of a web-beacon but also capable of providing repairs, fuel, safe-haven from web-ship conflict, upgrades and re-armament. This is herein called a web-base.
- The world wide web, which is used to provide the gaming co-ordinate system by the use of internet addresses, for example 193.121.23.41. This is herein called the game-space.

The invention also provides a computer program for causing a computer to interact with another computer via a computer network having a plurality of server computers each identified by a respective address, the program comprising program instructions for creating a notional multi-dimensional space, the co-ordinates of points in which are representative of said addresses, causing said computer to access any two or more selected servers (preferably in sequence) and for calculating the distance in the notional space between the co-ordinate points corresponding to the two server addresses.

Preferably, the software also includes instructions for causing the computer to determine whether the distance to be travelled by the browser from one point to another, requested point exceeds a given range and if it does, to prevent the browser accessing the server the address of which is representative of said point.

### Brief Description of the Drawings

The invention will now be described, by way of example only, with reference to the accompanying drawings in which:
Figure 1 is a schematic diagram of a computer system in accordance with the invention, the system being arranged to enable a game to be played by a number of players using client computers to interact with each other and with server computers;
Figure 2 is a flow chart of software on one of said servers;
Figure 3 is a flow chart showing the initial interaction between one of the player's computers and a server computer;
Figure 4 is a similar flow chart showing the processes undertaken by a player's computer during subsequent interactions with another player's computer;
Figure 5 is another flow chart, showing the processes undertaken by a player's computer when accessing another server;
Figure 6 is a corresponding flow chart showing the functional steps taken by the other server; and

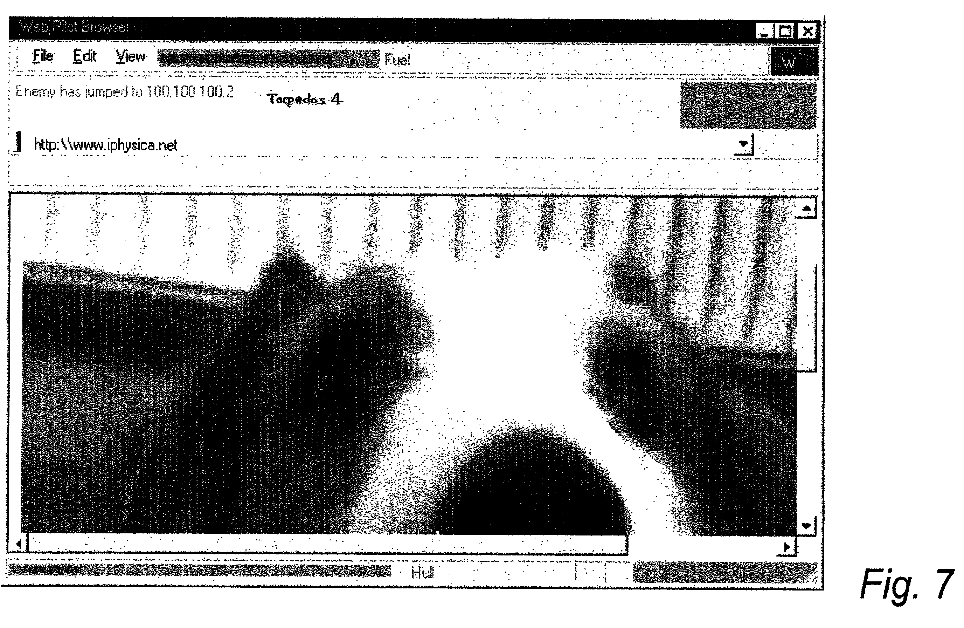

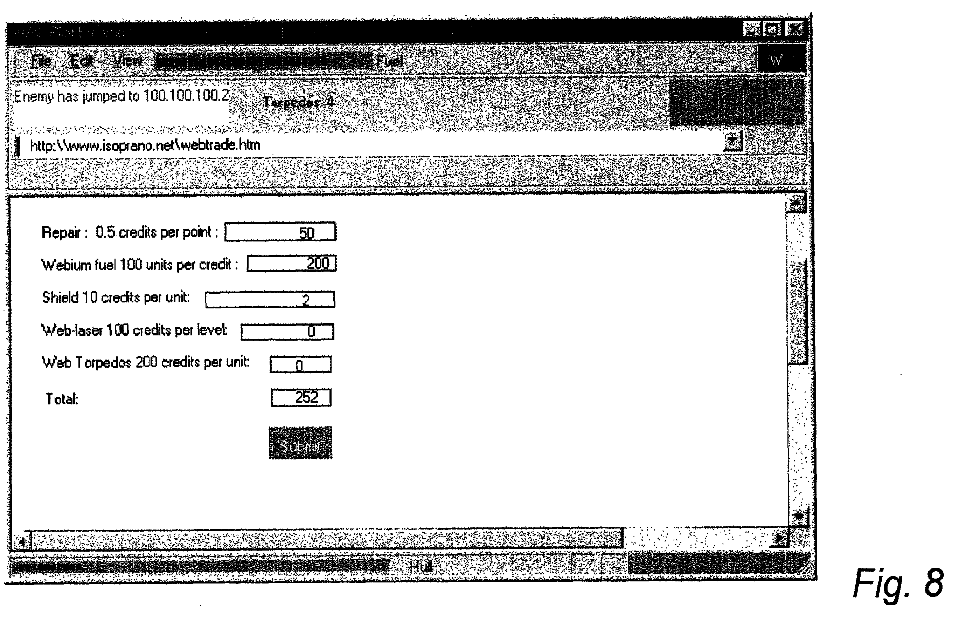

Figures 7 and 8 show examples of frames presented to a player during the playing of the game.

### Detailed Description

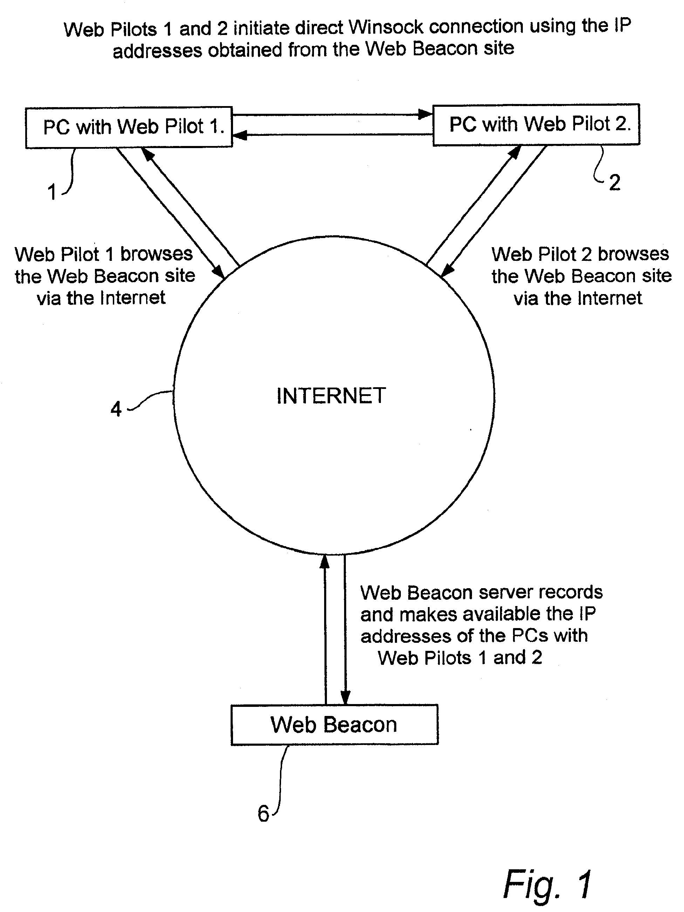

With reference to Figure 1, a system in accordance with the invention comprises a first client computer 1, and a second client computer 2, each of which is, in use, operated by a respective player and has respective modified web browser software (referred to as a web pilot software in the diagram). The client computers 1 and 2 are connected to the internet, schematically shown at 4 via which they can communicate with other internet servers, including a "web beacon" server 6.

The web browsers include software for defining a 3D space which is representative of the Internet Domain and in which each server corresponds to a respective co-ordinate point.

Each player has a notional ship for travelling through the space, and a change in the server being browsed by a computer's web browser is treated as a movement of the ship through the notional space to the co-ordinate point corresponding to the server.

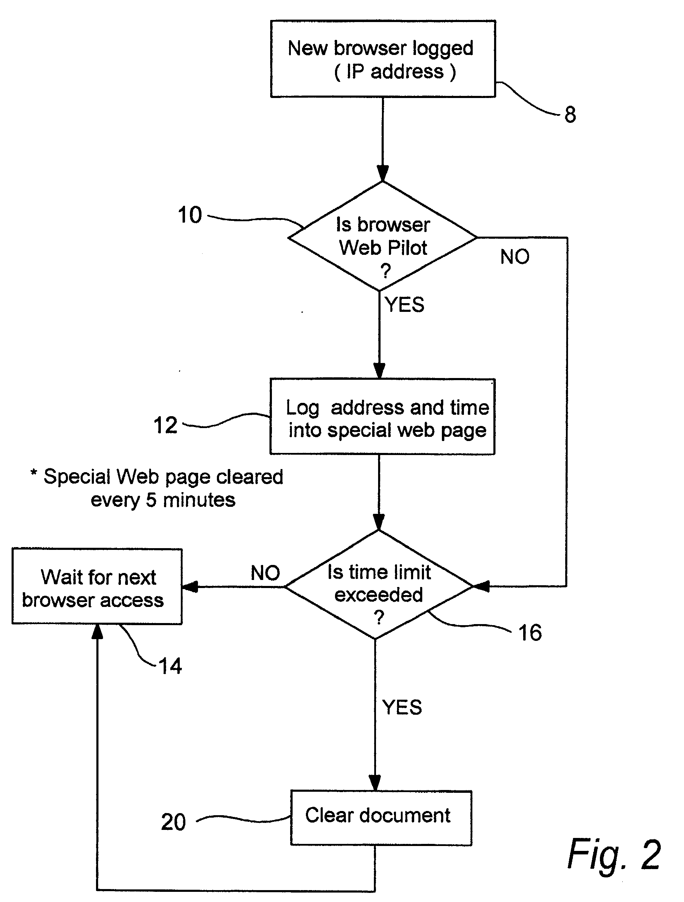

The server 6 may provide known types of internet site, for example a site over which a supplier may offer goods or services, and which is not directly related to the game. However, the server 6 also functions as a "web beacon" which will supply each player currently browsing that site with the IP addresses of any or all other players also browsing the same site at that time. This procedure is illustrated by the flow chart of Figure 2.

When a client computer (whether or not it is a computer of a player of the game) gains access to the beacon server 6, the computer's IP address is logged as indicated at box 8. The beacon server then ascertains whether the browser is a player (referred to as a "web pilot") as shown at decision box 10. If it is, the IP address and time at which the web pilot logs onto the beacon server are entered on a web page as indicated at box 12. This happens each time a new web pilot logs onto the server 6 (box 14) until a predetermined time limit has been reached, as indicated at box 16, whereupon the special web page is cleared as indicated at box 20. The process then repeats itself.

Each web pilot uses browser software that enables the player to enter an IP (Internet Protocol) address into the browser. In a simple version of the system, the numerical address is entered directly. In a more sophisticated example, however, the player's computer may present a rotatable and scalable three-dimensional map containing a matrix array of points, the co-ordinates of which (in a three axis Cartesian co-ordinate system) are the same as three of the four numbers of an Internet Protocol address. The fourth number is then entered manually.

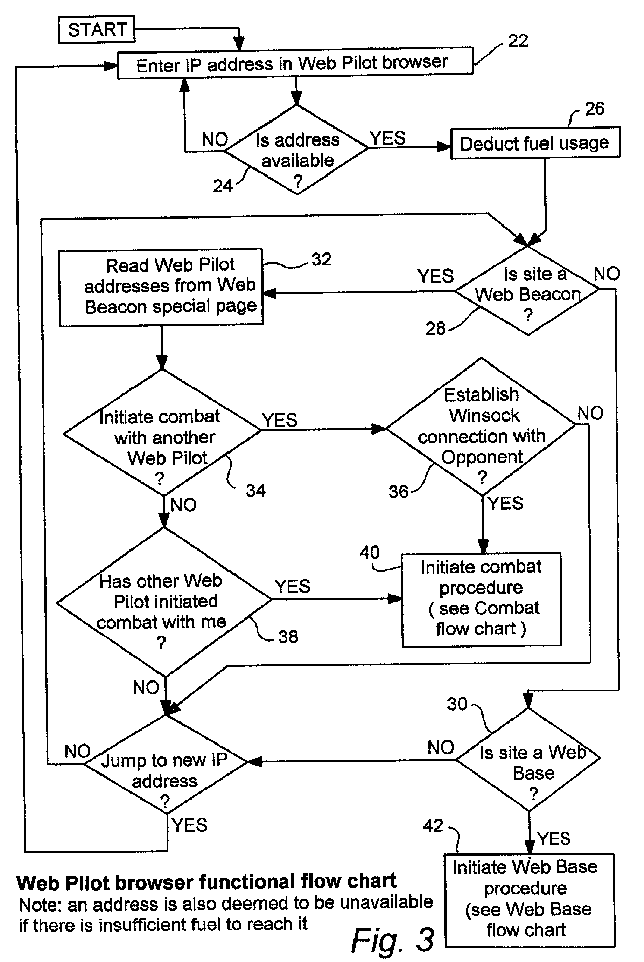

The entering of an IP address into the web pilot browser is indicated at box 22 in Figure 3. The browser software initially checks whether the input address corresponds to an actual server, and if not asks the user to try to enter another IP address, as indicated by decision box 24. If the address does correspond to that of a server, and the browser is already browsing another server site, the player's computer calculates the distance between the co-ordinates of the two sites in a notional four-dimensional space in which each internet address is at a respective point, the four axes Cartesian co-ordinates of which are the same as the IP address of the site. This distance can be calculated in a known manner, for example by adding the distances between the two sites along each of the four axes in quadruples. The game involves treating the switch in the server being browsed as a jump through the notional space, and that jump consuming fuel. Therefore, the browser is also programmed to deduct the fuel needed for the jump from the fuel available to the player, and indicated at box 26.

With reference to decisions boxes 28 and 30, the browser then checks the status of the site being browsed. More specifically, the software checks whether the site is a web beacon, such as is provided by the beacon server 6 or a web base, another modified server providing further facilities for playing the game. If the site is in neither category, the player will have no identifying information for any other players currently browsing the internet, and cannot therefore establish a connection with any such player. If, however, the site is a web beacon, the web pilot's software downloads the special web page referred to in relation to Figure 2 (box 32) and if the player wishes to initiate combat with another web player (identified on the page) establishes a socket connection with the other pilot (decision boxes 34 and 36). Similarly, another pilot browsing the web beacon site will have access to the current player's IP address and will also have the option of initiating combat with the player. The player's web software therefore also checks whether another web pilot has initiated combat as indicated at box 38. If combat is initiated by either of the two players, then the combat procedure is followed (box 40).

If the browse site is a web base then the procedure is initiated as indicated at box 42 (this procedure is described below).

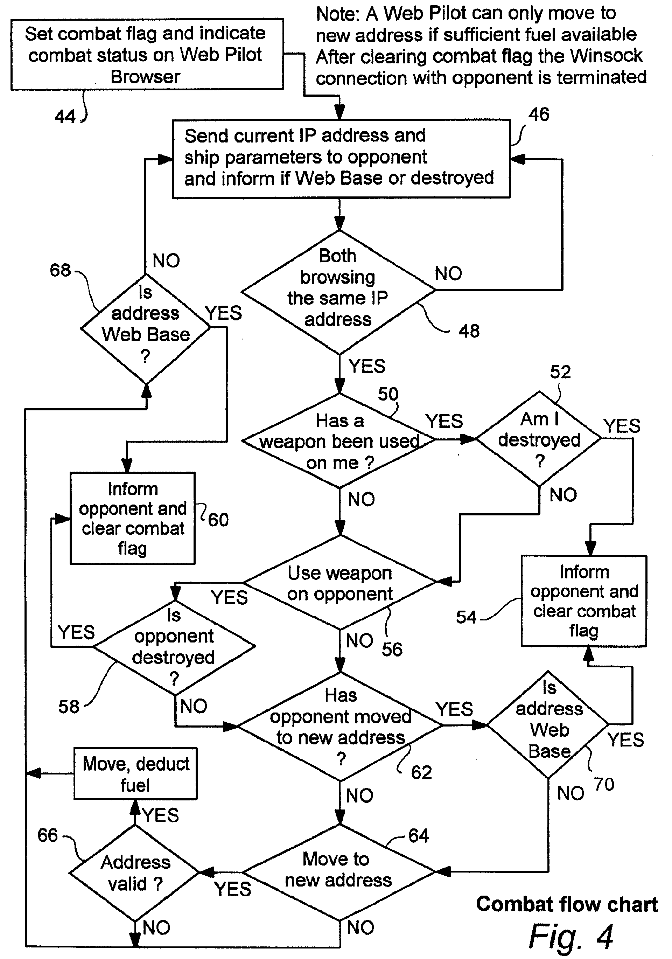

The procedure to be followed by a web pilot browser if combat is initiated is illustrated by the flow chart of Figure 4, in which box 44 refers to setting a combat flag (which is communicated to the other player) and sending the other player the current IP address and ship parameters as indicated by box 46. The computer then undergoes checking step 48 to determine whether both players are browsing the same IP address (the other player's browser will have communicated its IP address to the present player). If not, combat cannot be pursued, and at least one of the players needs to jump to another internet site so that both players are browsing the same site, whereupon either player may attack the other using a weapon on a notional ship (box 50). If the other player's weapon destroys the player's ship, this is determined by decision step 52, and results in the clearing of a combat flag at step 54 to end the combat. Steps 56, 58 and 60 respectively correspond to steps 50, 52 and 54, a situation in which the current player uses a weapon to attack the opponent's ship. If neither opponent's ship is destroyed in the initial engagement, then either can jump to another internet address as indicated in boxes 62-70, which also include the steps of determining whether the address to which one of the players has jumped is a "web base". Under the rules of the game, combat cannot occur when either player is at a web base, and in that event combat is ended as indicated at steps 54 and 60.

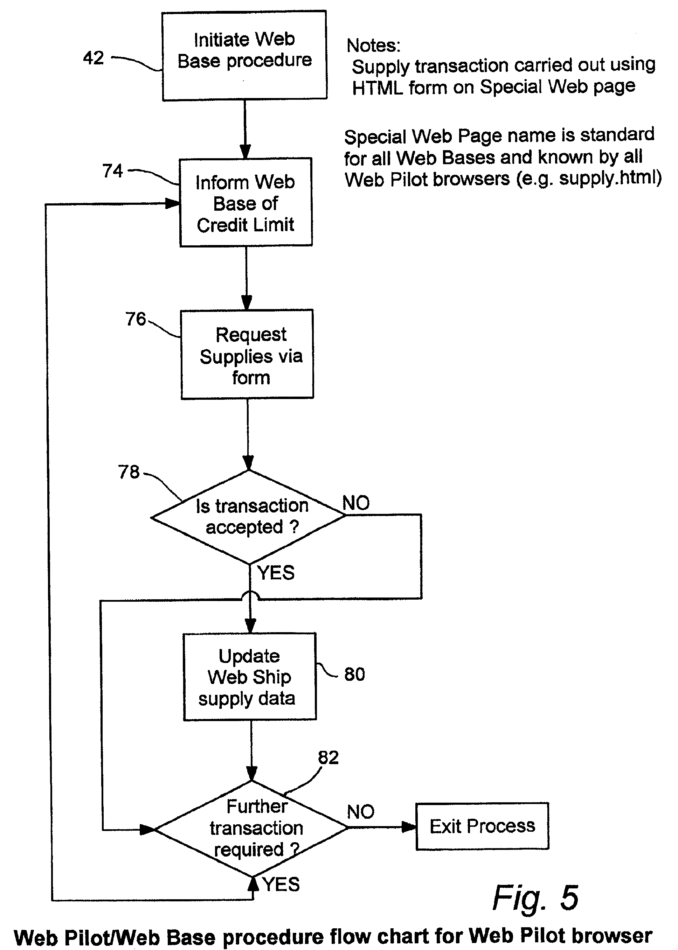

When a player's web pilot browser is browsing a web base, the procedure shown in Figure 5 is carried out by the browser software. This procedure enables the player to trade credits (1) for example, through trading or inflicting damage on other players' ships for various weapons or other features for current player's ship.

Thus, the web pilot browser informs the web base server of the number of credits held by the player, as indicated by box 74, and accepts a request for supplies at step 76. The server software then checks whether the credit value for the requested supplies exceeds the credit limit for that player and whether the requested supplies are available. The results of this process are communicated to the browser software which then forms step 78, i.e. to determine whether the transaction has been accepted. If it has, the data on the browser about the player's ship is updated appropriately. If the chart action has not been accepted, there is no update. In either event, however, the player is given the opportunity to submit further requests (step 82).

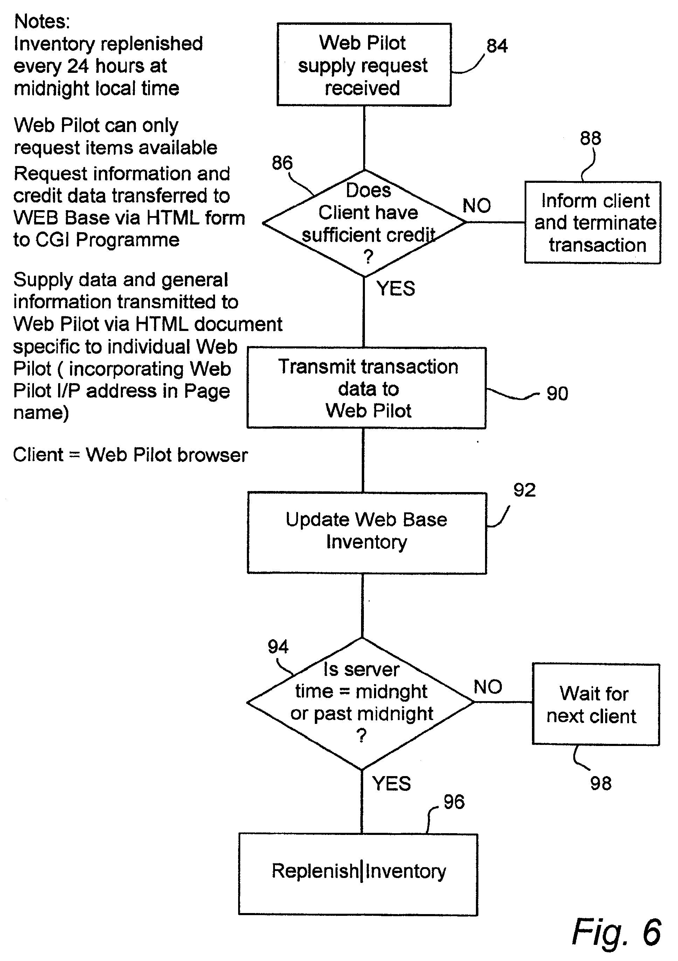

Figure 6 illustrates the processes carried out by the server which provides the web base.

The initial step of the procedure is indicated by reference numeral 84 and is the receipt of the supply request from the player. The server then checks whether the player has sufficient credit to purchase the requested supplies and if not, informs the player's computer accordingly (step 88) and terminates the transaction. If there is sufficient credit, the procedure then moves on to the step, step 90, of transmitting transaction data to the web pilot, via an HTML document specific to that pilot (by incorporating the address of the pilot in the page name). Before doing this, the server checks an inventory to determine whether the requested supplies are available in accordance with the rules of the game.

Once the transaction has been completed, the inventory is updated at step 92. Steps 94 to 98 cause the server to replenish the inventory on a daily basis.

The web browsers of the players also include software that places various constraints for facilitating the playing of the game. Thus, only one instance of the browser application may be run at any one time by a user, and each player may only browse one site at a time.

When a user browses a site, the browser may (in addition to gain specific information) download standard frames from the browsed server. Such frames are not supported directly, but a list of frame pages will be displayed on the user's screen and the facility provided for the user to select any one of those frames.

In a modified version of the game, the web browser software presents to each player a map setting out a three-dimensional matrix of points as described above. That map may also present various icons to indicate where in the associated multi-dimensional space the web bases and web beacons are located. If such a site is selected by a player, it is not then necessary for the player to add the fourth IP address, as this will be called up when the user selects the site using the icon. The map may be refined to indicate which sites are reachable with current reserves of fuel. Thus, for example, green could be used to indicate its sites which are in range, whilst sites which cannot be reached using current fuel reserves could be shown in red.

In any case, the desired site can be entered by using a mouse to double-click on the three-dimensional grid representation of that site. It is possible that, when trying to jump to a site, a user will enter an internet address which does not correspond to a server. In a modified version of the game, this event would lead to the web browser automatically re-directing the player's ship to a different site whilst expending no additional fuel. Applying the space analogy, this could be seen as equivalent to travelling through a worm hole.

The following gives details of one example of the gaming aspect of the invention.

In this example, all web-ship software will run under Microsoft Windows 98 and all web-beacon and web-base software will run under a Microsoft Windows NT 4.0 Server. IP addresses quoted are purely for example purposes and nothing else should be inferred from their use.

Only the first 3 number groupings from the IP address are used to provide the co-ordinate system in this example, e.g. 100.100.100.3 defines the game space co-ordinate 100.100.100. The numbers are used to provide a direct 3-dimensional Cartesian co-ordinate system in x, y and z. For example 100.200.300 means x=100, y=200, z=300. Distances are computed as if x, y, z were real 3-dimensional co-ordinates using standard trigonometrical calculations.

Fuel is consumed when jumping from one web-site to another. If all fuel is exhausted before reaching a web-base then the current ship configuration is deemed destroyed and cannot be reused.

The game is intended to be played with multiple web-ships, web-beacons and web-bases. Web-ships will be used one per PC (individual IP addresses) i.e. effectively one per player. Each web-beacon and web-base will exclusively occupy one web-site (i.e. one IP address). Web-beacons and web-bases are exclusive in any one IP address.

An exemplary web-ship is a browser capable of communicating with other web-ships, web-bases and web-beacons via standard internet protocols. It will be capable of loading and processing data-filed, defining basic ship characteristics such as shields, armaments, cargo space and fuel capacity. Additionally a deterioration factor will be defined for fuel consumed by moving from one web-site to the next. These data files may be called web-ship configuration files and in this example will be simple text files containing data encrypted using an RSA based encryption algorithm. If a ship is destroyed a unique ID present in the web-ship configuration file will be used as the basis of a hidden registry entry indicating that this configuration file cannot be reused. However, a basic (low specification) default ship will always be available should a player's current ship be destroyed in combat.

The web-ship will also be capable of mediating combat with other web-ships, keeping a record of ship status, credits earned by combat or trading, cargo carried and armaments available and used.

In this example it will be a specially written web-browser. Figure 1 shows an example of a suitable user interface.

An exemplary web-beacon is a web-server capable of notifying client web-pilots of all other web-pilots currently browsing the web-server site. In this example it will be a CGI program resident and active on the web-server computer.

An exemplary web-server has all the features of a web-beacon but is also capable of providing repairs, fuel, safe-haven from web-ship conflict, upgrades and re-armament. It will also provide information on webulae location and effects. In this example it will be a CGI program resident and active on the web-server computer. The user interface with the CGI program is of HTML based form.

For better understanding of the, an example of a gaming session will now be described.

Combat is fought in real-time as far as is possible given current local network, internet and web-server conditions.

Both web-ships have been alerted to the others presence by the web-beacon (which will make the IP addresses of all web-pilot browser applications currently browsing that site known to each other via a special web-page) and have exchanged configuration parameters via a direct socket (winsock) connection.

On the initiation of combat a combat flag will be set in each web-ship which will remain active until both parties have agreed to cease combat, either one ship reaches a web-base or one ship is destroyed. If either player quits the web-pilot application whilst the combat flag is set then the ship configuration loaded is deemed destroyed and will not be usable for further play. Credits awarded to each pilot on the basis of one per damage point scored against the opponent. If the opponent's ship is destroyed then double the damage points are awarded to the victor.

Additionally each web-ship will notify the other of a change in the site being browsed by the other (since combat can only take place if both ships are browsing at the same site).

In this example two web-pilots, players A and B are browsing the same web-site. The site web-server has a web-beacon and had an address of 100.100.100.1 Both pilots are low on fuel.

Player A has the following ship configuration loaded:
- Shields 10
- Fuel (termed webium) 100
- Web-torpedoes 2 at yield of 50 damage points (accuracy 30% hit probability)
- Web-laser level 1 unit at 20 damage points per hit (50% accuracy)
- Hull 100 points.

Player B has the following ship configuration loaded:
- Shields 12
- Fuel (webium) 93
- Web-torpedoes 1 unit at yield of 50 damage points (accuracy 35% hit probability)
- Web-laser level 2 at 440 damage points per hit (70% accuracy)
- Hull 100 points

Player B initiates combat and fires a web torpedo at player A and misses. Player A returns fire with a web torpedo and scores a hit on player B causing 50 points of damage, of which 12 are absorbed by player B's shields leaving 38 points of damage to hull. Player A therefore earns 38 credits and player B has only 62 hull points left.

Player B therefore decides to jump to 100.100.50.1 which costs 50 fuel points. Player A follows, again using 50 fuel points. Player B fires a web-laser and scores a hit causing 30 (40-10) points of damage to player A's ship. Player A jumps to 100.100.53.1 using 3 points of fuel; this site has a web-base so combat is terminated.

Player A now has safe haven but needs to refuel and re-arm. Player A's bank-roll has been bolstered by his recent combat with player B and stands at 87 credits. This allows him to repair the 30 points of hull damage, using 15 credits, and buy 200 units of webium fuel costing 20 credits. Player A also has a consignment of 5 units of webite which he sells for another 500 credits. This enables him to upgrade his shields to 20 and purchase a level-3 web-laser.

Player A also buys map information which indicates the location of a webula at 100.100.200, which extends 10 distance units in each Cartesian axis. This webula prevents the signalling of new browser co-ordinates to an opponent in a combat situation should player A decide to jump to a new location, meaning that he can lose an opponent and terminate combat simply by jumping to a new web-site from within the webula (the opponent will not know this unless he too has purchased map information).

Figure 2 shows an exemplary screen from a web-base session.

A preferred effect of the game architecture will be to direct large amounts of web-traffic to commercial sites providing web-base or web-beacon facilities, thus making the game a very effective advertising medium. Thus, the game works on two levels commercially:
- as a game, with players buying ship upgrades
- as an advertising tool, whereby commercial organisations buy or license web-base facilities to incorporate inn their web-sites.

## Claims

1. A computer system in which a plurality of computers, each having software providing a web browser, can interact with each other via the world wide web, the system comprising a plurality of web servers, each having at least one respective address, and software for defining a notional multi-dimensional space which contains said browsers and in which the co-ordinates of the position of each browser in that space are derived from the address of a server computer, the system also including software for permitting interactions between said computers when the locations of their browsers relative to each other in the notional space satisfy a predetermined requirement.

2. A system according to claim 1, in which said predetermined requirement is that the browsers of the computers be at the same location in said notional space, so that any two computers whose browsers are at the same point can interact with each other.

3. A system according to claim 1 and claim 2, in which the server addresses are numerical, and the software derives the location of any server in the notional space by treating at least part of the address as the Cartesian co-ordinates of the server in that space.

4. A system according to any of the preceding claims, in which the notional space is of three or more dimensions.

5. A system according to any of the preceding claims, in which, in use, the location of a browser in said space at any given time is the location of the server currently being browsed thereby.

6. A system according to any of the preceding claims, in which the software also includes program instructions for causing the distance between any two co-ordinate points in said notional space to be calculated.

7. A system according to claim 6, in which the software also includes means for limiting the distance that a browser can travel in the notional space by moving from one server address to another.

8. A system according to any of the preceding claims, in which the system includes more than one type of web browser each defining a unique co-ordinate point in the notional space and the web browser or browsers are able to interact differently with one type of said web server from servers of the other type.

9. A system according to claim 8, in which one of the servers is programmed with software which causes it to supply to the computer browsing that server information identifying one of more other computers also browsing that server.

10. A computer program for causing a computer to interact with another computer via a computer network having a plurality of server computers and associated respective addresses the program comprising program instructions for creating a notional multi-dimensional space, the co-ordinates of points in which are representative of said addresses, causing said computer to access any two or more selected servers and for calculating the distance in the notional space between the co-ordinate points corresponding to the two server addresses.

11. A program according to claim 10, in which the software also includes instructions for causing the computer to determine whether the distance to be travelled by the browser from one point to another exceeds a given range and if it does, to prevent the browser accessing the server the address of which is representative of said point.

12. Apparatus for playing a game the apparatus comprising a computer system in accordance with any of claims 1 to 10
